# EUROPÄISCHE PATENTSCHRIFT

(11) **EP 0 503 244 B1**
(45) Veröffentlichungstag und Bekanntmachung des Hinweises auf die Patenterteilung: **20.03.1996**
(21) Anmeldenummer: 92101045.0
(22) Anmeldetag: 23.01.1992
(51) Int. Cl.: F16K 27/00

(54) **Verbindungsanordnung**
Connection assembly
Assemblage de connexion

(30) Priorität: 13.03.1991 DE 4108108
(43) Veröffentlichungstag der Anmeldung: 16.09.1992
(73) Patentinhaber: Friatec Aktiengesellschaft Keramik- und Kunststoffwerke, D-68229 Mannheim (DE)
(72) Erfinder: Bläss, Jürgen, W-6805 Heddesheim (DE)
(74) Vertreter: Klose, Hans, Dipl.-Phys.

(56) Entgegenhaltungen:
- DE-A- 2 634 228
- DE-A- 3 405 229
- DE-A- 3 436 040
- US-A- 3 126 212

## Beschreibung

Die Erfindung bezieht sich auf eine Verhindungsanordnung einer Armatur mit einem Rohr gemäß den im Oberbegriff des Patentanspruchs 1 angegebenen Merkmalen.

Aus der DE-A-34 36 040 ist eine derartige Verbindungsanordnung bekannt, welche mittels einer einem Rohr zugeordneten Überwurfmutter die Verbindung mit einem Pumpenstutzen über einen Gewindering ermöglicht. Die Überwurfmutter ist über ein Innengewinde mit dem Außengewinde des Gewinderings verschraubt, wobei dessen Innengewinde auf ein zugeordnetes Außengewinde des Pumpenstutzens geschraubt ist. Der Gewindering weist einen im Prinzip L-förmigen Querschnitt auf und enthält als Mitnehmer einen ringförmigen Bund, welcher radial nach außen über das Außengewinde vorsteht. Mit diesem Bund steht die genannte Überwurfmutter form- und kraftschlüssig in Eingriff. Für Überwurfmuttern gibt es die DIN 2950 und für zylindrische Zollgewinde gilt die Norm DIN ISO 228. Je nach Anwendungsfall und Ausbildung der Rohre werden von den Armaturenherstellern die Gewinderinge für Kupfer- oder Stahlrohreanschluß mitgeliefert. Damit beim Gießen des Pumpen- bzw. Armaturengehäuses günstige Voraussetzungen vorliegen und eine kostengünstige Fertigung ermöglicht wird, ist das Außengewinde regelmäßig der Kontur des Armaturengehäuses angepaßt und die Abmessungen derartiger Außengewinde entsprechen oftmals nicht denen von genormten Gewinden. Zudem sind Kunststoffrohr-Verschraubungen mit klebbarem Einlegeteil, einer Überwurfmutter, einem Dichtring und einem mit der Armatur zu verbindenden Einschraubteil nach DIN 8063 genormt und in der Praxis treten sehr oft Probleme im Hinblick auf die Anpaßbarkeit auf. Aufgrund der L-förmigen Ausbildung des Gewinderings der eingangs erwähnten Verbindungsanordnung können beim Aushau der Armatur, beispielsweise zu Wartungszwecken, Schwierigkeiten auftreten. Beim Aufdrehen der Überwurfmutter kann nämlich der Gewindering mitdrehen und am Dichtring oder Einlegeteil hängenbleiben, so daß ein vollständiges Lösen und Herausnehmen der Armatur zumindest erheblich behindert wird. Dies gilt um so mehr, als die Üherwurfmutter bezüglich des Gewinderinges die Funktion einer Kontermutter erfüllen kann und bei einem zu starken Festziehen oder infolge von Korrosion der ineinander greifenden Gewinde eine zerstörungsfreie Lösung derselben praktisch nicht mehr durchführbar sein kann.

Eine weitere Verbindungsanordnung ist aus der US-A-3 126 212 bekannt. Diese Verbindungsanordnung eines Ventilgehäuses enthält einen Gewindering, welcher auf ein Außengewinde eines Stutzens aufgeschraubt ist. Ferner ist eine Rohrverschraubung mit einer Überwurfmutter vorgesehen, welche auf das Außengewinde des genannten Gewinderinges aufschraubbar ist. Diese Rohrverschraubung besitzt eine konische Dichtfläche, welche in einen radialen Flansch der Rohrverschraubung ausläuft. Es besteht die Gefahr, daß bei der Montage der Gewindering mit dem genannten Flansch der Rohrverschraubung zur Anlage kommt, wodurch die Herstellung einer dichten Verbindung in Frage gestellt sein kann. Beim eventuellen Lösen der genannten Verbindungsanordnung können die eingangs erläuterten Probleme auftreten.

Desweiteren ist aus der DE-A-34 05 229 ein Anschlußstück für Schlauchleitungen bekannt, welches in einer besonderen Ausführungsform einen Gewindering aufweist, welcher mittels einer Sicherungsschraube verschiebbar gehalten ist. Ein Anschlußteil des Schlauches ist mittels eines Endflansches in einem Gewindeteil eines Sicherungsringes festgelegt, und insgesamt sind drei Dichtungsringe vorgesehen. Die Sicherungsschraube enthält außen an einem Kopf das Gewinde und sie ist vollständig in das Gewindeteil eingeschraubt, wobei eine Mitnahmefunktion beim Aufschrauben des Gewindeteils nicht vorgesehen ist. Der genannte Gewindering ist vollständig innerhalb des Gewindeteils angeordnet und besitzt kein Außengewinde.

Schließlich ist aus der DE-A-26 34 228 ein Isolierstück für die Hausinstallation bekannt, welches zum nachträglichen Anhau an Absperrhähne für Gas ausgebildet ist. Mittels des Isolierstücks soll die aus Sicherheitsgründen erforderliche elektrische Trennung zwischen einer Gaszuführleitung und einer Hausanschlußleitung erfolgen. Das Isolierstück enthält einen Gewindering, wobei sowohl in radialer Richtung als auch in axialer Richtung zwischen dem Gewindering und dem Gehäuse des Isolierstücks Ringe aus Kunststoff zur elektrischen Isolation vorgesehen sind. Das Gehäuse des Isolierstücks ist mit dem Ahsperrhahn verschraubbar und zur Drehsicherung sind Bolzen vorhanden, welche mittels einer kleinen Schraube gesichert werden können. Diese Schraube ist vollständig in das Gehäuse des Isolierstücks eingeschraubt, ohne eine Mitnehmerfunktion auszuüben.

Hiervon ausgehend liegt der Erfindung die Aufgabe zugrunde, eine Verbindungsanordnung der eingangs genannten Art dahingehend weiterzubilden, daß bei einfacher Fertigung die Armatur problemlos mit dem Rohr verbindbar ist und ohne Schwierigkeiten ein Austausch oder Reparaturmaßnahmen durchführbar sind.

Die Lösung dieser Aufgabe erfolgt gemäß den kennzeichnenden Merkmalen des Patentanspruchs 1.

Die vorgeschlagene Verhindungsanordnung zeichnet sich durch eine einfache Konstruktion aus und erfordert einen minimalen zusätzlichen Material- und Herstellungsaufwand. Der zwischen dem Anschluß- oder Außengewinde der Armatur und dem Innengewinde der genormten Überwurfmutter vorgesehene Gewindering kann kostengünstig gefertigt werden und bedingt nur einen minimalen Lagerhaltungsaufwand. Der Gewindering enthält einen Mitnehmer, welcher gewährleistet, daß die dem Rohr zugewandte Stirnfläche zum Bund des Einlegeteils einen größeren Abstand aufweist als die Stirnfläche des Armaturengehäuses. Damit wird gewährleistet, daß der Gewindering unter allen Umständen weit genug auf das Außengewinde des Armaturengehäuses aufgeschraubt ist und die Abdichtung ausschließlich und funktionssicher zwischen der Stirnfläche des Bundes und der Stirnfläche des Armaturengehäuses erfolgt. Erreicht beim Aufschrauben der Überwurfmutter deren vorderes Ende den Mitnehmer oder Anschlag, so wird beim weiteren Festschrauben zuverlässig der Gewindering in der erforderlichen Weise mitgenommen. Der radial zwischen dem Anschluß- oder Außengewinde und dem Innengewinde der Überwurfmutter angeordnete Gewindering erfordert keine Verlängerung der axialen Baulänge.

Der Mitnehmer ist als eine Schraube ausgebildet, welche den Gewindering durchdringt und ferner zur Festsetzung des Gewinderinges auf dem Armaturengehäuse dient. Soll die Armatur zu Wartungszwecken ausgebaut werden, so wird der Gewindering zunächst mittels der genannten Schraube auf dem Armaturengehäuse befestigt, sodaß beim Aufdrehen der Überwurfmutter der Gewindering nicht mitgedreht werden kann. Ansonsten besteht die Gefahr, daß der Gewindering mitgedreht wird und am Dichtring hängen bleibt, sodaß ein vollständiges Lösen und Herausnehmen der Armatur erheblich behindert oder gar unmöglich gemacht wird.

Weiterbildungen und besondere Ausgestaltungen der Erfindung sind in den Unteransprüchen angegeben.

Die Erfindung wird nachfolgend anhand eines in der Zeichnung dargestellten Ausführungsbeispiels näher erläutert. Es zeigen:
- Fig. 1: schematisch einen axialen Längsschnitt der Verbindungsanordnung,
- Fig. 2: einen axialen Schnitt des Gewinderinges.

Eine als Ventil ausgebildete Armatur 2 enthält ein Gehäuse 4, mit welchem in bekannter Weise ein Ventiloberteil 6 mit einem Handrad 8 befestigt ist. Das Gehäuse weist an seinen Enden jeweils ein Außengewinde 10, 11 zur Verbindung mit der anzuschließenden Rohrleitung auf. Diese Außengewinde 10, 11 sind Spezialgewinde des Armaturenherstellers und entsprechen nicht den nach DIN 2950 genormten Gewinden für Überwurfmuttern. Die Außengewinde 10, 11 sind der Kontur des Gehäuses 4 im Hinblick auf möglichst günstige Gießbedingungen angepaßt.

Für die Außengewinde 10, 11 ist jeweils ein Einlegeteil 12 mit einem Bund 14 vorgesehen. In der Zeichnung ist oben die fertig montierte Verbindungsanordnung und unten die Verbindungsanordnung explosionsartig dargestellt, wobei die entsprechenden Bauteile spiegelbildlich zueinander liegen. In das Innere der Hülse 12 ist ein Rohr 16 eingesetzt und in geeigneter Weise verbunden. Besteht das Rohr 16 aus Kunststoff, so kann in zweckmäßiger Weise eine Kaltschweißverbindung oder Schweißverbindung zwischen dem Rohrende und der Innenfläche des Einlegeteils 12 vorhanden sein, wobei die Hülse 12 gleichfalls aus Kunststoff besteht. Für Rohre aus Kupfer oder Metall besteht die Hülse gleichfalls aus Metall, um eine Lötverbindung oder über entsprechende Gewinde eine Schraubverbindung mit dem Rohr herstellen zu können. über den Bund 14 ist in bekannter Weise eine Uberwurfmutter 18 geschoben, welche mit einem Ringteil 20 an der einen Endfläche des Bundes 14 in der dargestellten Weise anliegt. Die Überwurfmutter 18 übergreift den Flansch sowie das Außengewinde 10 des Gehäuses 4, wobei ein Dichtring 22 nach DIN 8063 Teil 3 zwischen der axialen Stirnfläche 24 des Gehäuses 4 und der gegenüberliegenden Stirnfläche 26 des Bundes 14 zur Abdichtung angeordnet ist.

Die Überwurfmutter 18 enthält ein Innengewinde 28, welches genormt ist und zwar insbesondere nach DIN 8063 Teil 3. In radialer Richtung zwischen dem Gehäuse 4 und der Überwurfmutter 18 ist im Rahmen dieser Erfindung ein Gewindering 30 angeordnet, über welchen mittelbar und gleichwohl auf kürzestem Wege die Verbindung zwischen der Überwurfmutter 18 und dem Gehäuse 4 der Armatur 2 erfolgt. Dieser Gewindering 30 weist ein Außengewinde entsprechend dem genormten Innengewinde der Überwurfmutter 18 und ferner ein Innengewinde entsprechend dem spezifischen Außengewinde des Gehäuses 4 auf. Die axiale Länge 32 des Gewinderinges ist maximal so groß wie die Länge des genormten Innengewindes der Überwurfmutter 18 sowie der gleichfalls genormten axialen Dicke der Dichtung 22. Wesentlich ist, daß die axiale Endfläche 34 des Gewinderinges 30 nicht bezw. ohne Vorspannung an dem Dichtring 22 anliegt. Hierdurch wird gewährleistet, daß der Dichtring 22 ausschließlich zwischen den gegenüberliegenden Stirnflächen 24 und 26 unter Vorspannung dichtend anliegt und der Gewindering keine nachteilige Auswirkung auf die Dichtwirkung ausüben kann. Würde nämlich der Gewindering 30 über die freie Stirnfläche 24 in Richtung zum Rohr 16 vorstehen, so würde nach dem Festziehen der Überwurfmutter der Dichtring am äußeren Rand zwischen dem Gewindering 30 und dem Flansch 14 eingespannt, wodurch die Dichtwirkung in Frage gestellt wäre. Im montierten Zustand ist die Endfläche 34 des Gewinderinges 30 bezüglich der Stirnfläche 24 des Gehäuses 4 erfindungsgemäß um einen definierten Abstand zurückversetzt, der gegebenenfalls auch sehr klein sein kann. Wie ersichtlich, wird durch den Gewindering 30 die Baulänge der Armatur 2 nicht verlängert.

Um den Fertigungs- und Montageaufwand gering zu halten, ist dem Gewindering 30 ein Mitnehmer 36 zugeordnet, welcher hier als eine Schraube ausgebildet ist. Dieser Mitnehmer 36 ist zweckmäßig im Bereich der anderen axialen Endfläche 38 in eine dort vorgesehene Gewindebohrung eingeschraubt. Zur Montage wird zunächst der Gewindering 30 auf das Anschlußgewinde 10 mit wenigen Umdrehungen, bevorzugt zwei oder drei, aufgeschraubt und nachfolgend wird die Überwurfmutter 18 auf den Gewindering 30 aufgeschraubt. Hierbei gelangt der Mitnehmer 36 beim weiteren Aufschrauben der Überwurfmutter 18 an deren freiem Ende 40 zur Anlage und beim Weiterdrehen der Überwurfmutter 18 wird der Gewindereing 30 selbsttätig in der erforderlichen Weise mitgenommen.

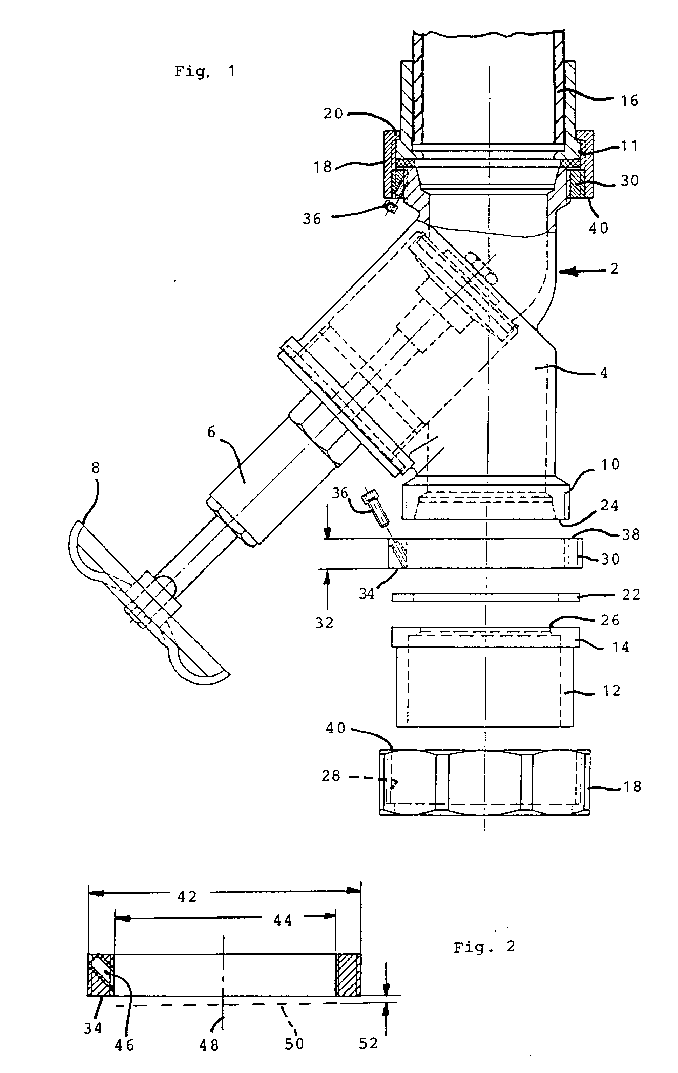

Grundsätzlich könnte der Mitnehmer auch als ein Ringbund ausgebildet sein, welcher im Bereich des anderen axialen Endes 38 angeordnet ist und über das Außengewinde des Gewinderinges radial vorsteht, um von dem freien Ende 40 der Überwurfmutter 18 beim Festschrauben mitgenommen zu werden. Bei einer derartigen alternativen Ausführungsform des Gewinderinges ist dessen axiale Gesamtlänge etwas größer als der bei in Figur 1 dargestellten Ausführungsform, welche eine minimale axiale Länge aufweist. Wie ersichtlich, liegen gemäß Fig. 1 das freie Ende 40 der Überwurfmutter 18 und die andere axiale Endfläche 38 des Gewinderinges 30 im wesentlichen in der gleichen Radialebene.

Wie ersichtlich, befindet sich der Gewindering 30 außerhalb des vom strömenden Medium der Rohrleitung und der Armatur durchflossenen Innenraumes. Der Gewindering 30 kommt folglich auch nicht mit dem in der Rohrleitung fließenden Medium in Berührung, sodaß er eventuellen korrosiven Einflüssen des Mediums nicht ausgesetzt ist und in zweckmäßiger Weise auch aus Messing hergestellt werden kann.

Fig. 2 zeigt den Gewindering 30, dessen Außengewinde einen Außendurchmesser 42 und dessen Innengewinde einen Kerndurchmesser 44 aufweist. Der Außendurchmesser 42 des Außengewindes entspricht der Norm DIN 2950 für Überwurfmuttern, und zwar unter Berücksichtigung der jeweiligen Nennweite DN des anzuschließenden Rohres. Im Bereich der axialen Endfläche 38 ist eine Durchgangsbohrung 46 vorgesehen, welche zur Längsachse 48 zweckmäßig einem Winkel in der Größenordnung von 45° geneigt angeordnet ist. In diese Durchgangsbohrung 46 ist der als Schraube ausgebildete Mitnehmer 36 einschraubbar. Soll die Armatur 2 aus der Rohrleitung zu Wartungszwecken ausgebaut werden, so wird die Schraube 36 soweit eingeschraubt, bis ihre Spitze auf dem Außengewinde des Gehäuses fest aufliegt. Durch entsprechendes Anziehen der Schraube 36 wird der Gewindering 30 bezüglich des Gehäuses gegen Drehung gesichert. Nunmehr kann die Überwurfmutter aufgedreht werden, wobei deren Innengewinde aus dem Außengewinde des Gewinderinges 30 herausgedreht wird, sodaß nachfolgend die Armatur seitlich aus der Rohrleitung herausgenommen werden kann.

Die Schraube 36 hat also eine Doppelfunktion, und zwar dient sie einerseits als Mitnehmer beim Festziehen der Überwurfmutter 18 und andererseits ermöglicht sie die Drehsicherung des Gewinderinges 30 bezüglich des Gehäuses 4, um nachfolgend ungehindert die Überwurfmutter zurückschrauben und die Armatur ausbauen zu können. Damit unabhängig von der jeweiligen Drehwinkellage des Gewinderinges bezüglich des Gehäuses die Schraube 36 problemlos festgezogen werden kann, sind über den Umfang des Gewinderinges in zweckmäßiger Weise wenigstens zwei derartige Schrauben verteilt angeordnet; als besonders zweckmäßig hat es sich erwiesen, drei derartige Schrauben gleichmäßig über den Umfang verteilt vorzusehen. Wie beispielsweise in Verbindung mit Fig. 1 ersichtlich, könnte nämlich durch das Oberteil 6 der Armatur 2 die Zugänglichkeit zum Mitnehmer bzw. durch Schraube 36 behindert sein, wenn sich diese zufällig im wesentlichen in der gleichen Axialebene wie das Oberteil 6 befindet. Ist über den Umfang versetzt wenigstens eine weitere Durchgangsbohrung vorgesehen, so kann dort eine entsprechende Schraube zum Festsetzen des Gewinderinges 30 eingeschraubt werden. Wie mittels der gestrichelten Linie 50 angedeutet, welche der axialen Stirnfläche des Armaturengehäuses im montierten Zustand entspricht, ist die Endfläche 34 des bezüglich der genannten Stirnfläche des Armaturengehäuses um einen Abstand 52 zurückversetzt.

### Bezugszeichen

- 2: Armatur
- 4: Gehäuse
- 6: Oberteil
- 8: Handrad
- 10, 11: Außengewinde
- 12: Einlegeteil
- 14: Bund
- 16: Rohr
- 18: Überwurfmutter
- 20: Ringteil
- 22: Dichtung
- 24: Stirnfläche von 4
- 26: Stirnfläche von 12
- 28: Innengewinde
- 30: Gewindering
- 32: Länge von 30
- 34: axiale Endfläche von 30
- 36: Mitnehmer/Schraube
- 38: andere axiale Endfläche von 30
- 40: freies Ende von 18
- 42: Außendurchmesser von 30
- 44: Kerndurchmesser von 30
- 46: Durchgangsbohrung
- 48: Längsachse
- 50: gestrichelte Linie
- 52: Abstand

## Patentansprüche

1. Verbindungsanordnung einer Armatur (2) mit einem Rohr (16), enthaltend eine dem Rohr (16) zugeordnete Überwurfmutter(18), über deren Innengewinde (28) die Verbindung mit einem Außengewinde (10) der Armatur (2) herstellbar ist, wobei die Überwurfmutter (18) mit einem mit dem Rohr (16) verbindbaren Einlegeteil (12) in Eingriff steht und wobei zwischen dem Innengewinde (28) der Überwurfmutter (18) und dem Außengewinde (10) des Gehäuses (4) der Armatur (2) ein Gewindering (30) mit einem Mitnehmer (36) angeordnet ist, an welchem die Überwurfmutter (18) mit einem freien Endc (40) beim Aufschrauben zunächst zur Anlage gebracht wird und mittels welchem nachfolgend der Gewindering (30) derart mitgedreht wird, daß nach dein vollständigen Aufschrauben und Festziehen der Überwurfmutter (18) die axiale Endflächc (34) des Gewinderinges (30) in einem vorgegebenen Abstand bezüglich der Stirnflächc (24) des Gehäuses (4) zurückversetzt angeordnet ist,
dadurch gekennzeichnet, daß das Außengewinde des Gewinderinges (30) entsprechend dem Innengewinde (28) der Überwurfmutter (18) als ein genormtes Gewinde ausgebildet ist und daß der Mitnehmer (36) als Schraube ausgebildet ist, welche in einer Bohrung (46) des Gewinderinges (30) im Bereich des axialen Endes (38) desselben angeordnet ist und teilweise aus diesem herausragt.

2. Verbindungsanordnung nach Anspruch 1, dadurch gekennzeichnet, daß das Innengewinde (28) der Überwurfmutter (18) nach DIN 2950 genormt ist.

3. Verbindungsanordnung nach Anspruch 1 oder 2, dadurch gekennzeichnet, daß die Gewindebohrung (46) als eine durchgehende Bohrung derart ausgebildet ist, daß durch Andrehen der Schraube (36) eine Drehsicherung des Gewinderinges (30) bezüglich des Gehäuses (4) durchführbar ist.

4. Verbindungsanordnung nach einem der Ansprüche 1 bis 3, dadurch gekennzeichnet, daß über den Umfang des Gewinderinges (30) verteilt wenigstens zwei Bohrungen (46) angeordnet sind.

5. Verbindungsanordnung nach einem der Ansprüche 1 bis 4, dadurch gekennzeichnet, daß zur Abdichtung ein einziger Dichtring (22) zwischen der axialen Stirnfläche (24) des Gehäuses (4) und der axialen Stirnfläche (26) der Hülse (12) vorgesehen ist und daß der Gewindering (30) außerhalb des vom Medium durchströmbaren und mittels der Dichtung (22) abgedichteten Innenraumes der Armatur (2) und des Rohres (10) angeordnet ist.

6. Verbindungsanordnung nach einem der Ansprüche 1 bis 5, dadurch gekennzeichnet, daß die axiale Länge (32) des Gewinderinges (30) höchstens so groß ist wie die axiale Länge des genormten Innengewindes (28) der Uberwurfmutter (18) unter Berücksichtigung der axialen Dicke der Dichtung (22).

7. Verbindungsanordnung nach einem der Ansprüche 1 bis 6, dadurch gekennzeichnet, daß die Bohrung (46) zur Längsachse (48) in einem Winkel geneigt angeordnet ist, wobei dieser Winkel bevorzugt im wesentlichen 45° groß ist.

## Claims

1. Arrangement for connecting a fitting (2) to a pipe (16), comprising a union nut (18) associated with the pipe (16) via the internal thread (28) of which the connection to an external thread (10) of the fitting (2) can be produced, the union nut (18) being in engagement with an insert (12) which can be connected to the pipe (16) and a threaded ring (30) being arranged between the internal thread (28) of the union nut (18) and the external thread (10) of the housing (4) of the fitting (2), said threaded ring having a follower (36) against which the union nut (18) is first brought to bear via its free end (40) when it is screwed on and by means of which the threaded ring (30) is then also rotated in such a manner that once the union nut (18) has been completely screwed on and tightened, the axial end face (34) of the threaded ring (30) is arranged so that it is set back at a predetermined distance from the end face (24) of the housing (4), characterised in that the external thread of the threaded ring (30) is a standard thread corresponding to the internal thread (28) of the union nut (18) and that the follower (36) is a screw which is arranged in a bore (46) in the threaded ring (30) in the region of the axial end (38) of the latter and projects partially therefrom.

2. Connection arrangement according to claim 1, characterised in that the internal thread (28) of the union nut (18) is a standard thread in accordance with DIN 2950.

3. Connection arrangement according to claim 1 or claim 2, characterised in that the threaded bore (46) is a through bore so that the threaded ring (30) can be secured against rotation relative to the housing (4) by tightening the screw (36).

4. Connection arrangement according to one of claims 1 to 3, characterised in that at least two bores (46) are distributed over the circumference of the threaded ring (30).

5. Connection arrangement according to one of claims 1 to 4, characterised in that one single sealing ring (22) is provided for sealing between the axial end face (24) of the housing (4) and the axial end face (26) of the sleeve (12) and that the threaded ring (30) is arranged outside the inner space of the fitting (2) and the pipe (10) through which the medium can flow and sealed off by means of the seal (22).

6. Connection arrangement according to one of claims 1 to 5, characterised in that the axial length (32) of the threaded ring (30) is no greater than the axial length of the standard internal thread (28) of the union nut (18) taking account of the axial thickness of the seal (22).

7. Connection arrangement according to one of claims 1 to 6, characterised in that the bore (46) is inclined at an angle relative to the longitudinal axis (48), this angle preferably being approximately 45°.

## Revendications

1. Dispositif de connexion d'une ferrure (2) avec un tuyau (16), comprenant un écrou d'accouplement (18) associé au tuyau (16), sur le filetage extérieur (28) duquel la connexion peut être réalisée avec un filetage extérieur (10) de la ferrure (2), l'écrou d'accouplement (18) étant en prise avec un insert (12) se reliant au tuyau (16), et une bague filetée (30) étant placée entre le filetage intérieur (28) de l'écrou d'accouplement (18) et le filetage extérieur (10) du boîtier (4) de la ferrure (2) avec un entraîneur (36), sur lequel l'écrou d'accouplement (18) est d'abord placé en appui avec une extrémité libre (40) lors du vissage et au moyen duquel, ensuite, la bague filetée (30) est entraînée en rotation, de sorte qu'après la vissage complet et le serrage de l'écrou d'accouplement (18), la surface d'extrémité axiale (34) de la bague filetée (30) est placée décalée vers l'arrière à une distance prédéterminée par rapport à la surface frontale (24) du boîtier (4), ***caractérisé en ce que*** le filetage extérieur de la bague filetée (30) est conformé, de manière correspondante au filetage intérieur (28) de l'écrou d'accouplement (18), en tant que filetage normé, et ***en ce que*** l'entraîneur (36) est conformé en vis, qui est placée dans un perçage (46) de la bague filetée (30) au niveau de l'extrémité axiale (38) de celle-ci, et dépasse partiellement de celle-ci.

2. Dispositif de connexion selon la Revendication 1, ***caractérisé en ce que*** le filetage intérieur (28) de l'écrou d'accouplement (18) est normé selon la norme DIN 2950.

3. Dispositif de connexion selon la Revendication 1 ou 2, ***caractérisé en ce que*** le perçage fileté (46) est conformé en perçage traversant, de telle manière que, par vissage de la vis (36), une immobilisation de la bague filetée (30) par rapport au boîtier (4) est réalisable.

4. Dispositif de connexion selon l'une des Revendications 1 à 3, ***caractérisé en ce qu***'au moins deux perçages (46) sont répartis sur la circonférence de la bague filetée (30).

5. Dispositif de connexion selon l'une des Revendications 1 à 4, ***caractérisé en ce que****,* pour l'étanchéité, une seule bague d'étanchéité (22) est prévue entre la surface frontale axiale (24) du boîtier (4) et la surface frontale axiale (26) de la douille (12), et ***en ce que*** la bague filetée (30) est placée à l'extérieur de l'espace intérieur de la ferrure (2) et du tuyau (10) traversé par le milieu en écoulement et hermétiquement fermé au moyen du joint (22).

6. Dispositif de connexion selon l'une des Revendications 1 à 5, ***caractérisé en ce que*** la longueur axiale (32) de la bague filetée (30) est au maximum aussi grande que la longueur axiale du filetage intérieur normé (28) de l'écrou d'accouplement (18) en tenant compte de l'épaisseur axiale du joint (22).

7. Dispositif de connexion selon l'une des revendications 1 à 6, ***caractérisé en ce que*** le perçage (46) est disposé incliné d'un angle par rapport à l'axe longitudinal (48), cet angle étant de préférence sensiblement de 45°.
